# EUROPEAN PATENT SPECIFICATION

(11) **EP 4 036 431 B1**
(45) Date of publication and mention of the grant of the patent: **08.01.2025**
(21) Application number: 20868507.3
(22) Date of filing: 24.09.2020
(51) Int. Cl.: F16D 65/02, F16D 65/097, F16D 65/18, F16D 121/04, F16D 125/04, F16D 55/228

(54) **CALIPER BODY FOR VEHICULAR DISC BRAKE**
SATTELKÖRPER FÜR FAHRZEUGSCHEIBENBREMSE
CORPS D'ÉTRIER POUR FREIN À DISQUE DE VÉHICULE

(30) Priority: 27.09.2019 JP 2019178004; 27.09.2019 JP 2019178005; 27.09.2019 JP 2019178006
(43) Date of publication of application: 03.08.2022
(73) Proprietor: Hitachi Astemo, Ltd., Ibaraki 312-8503 (JP)
(72) Inventor: TEZUKA Toshihiro, Hitachinaka-shi, Ibaraki 3128503 (JP)
(74) Representative: Hoefer & Partner Patentanwälte mbB
(86) International application number: PCT/JP2020/035920
(87) International publication number: WO 2021/060329

(56) References cited:
- DE-A1- 10 260 829
- JP-A- 2000 240 693
- JP-A- 2007 225 058
- JP-A- 2011 163 401
- JP-A- S58 203 236
- JP-A- S58 203 236
- US-B1- 6 722 476

## Description

### Technical Field

The present invention relates to a vehicular disc brake, and more particularly to a caliper body for an opposed piston type vehicular disc brake including a pair of action parts arranged facing each other with a disc rotor interposed therebetween, and a bridge part extending over an outer peripheral side of the disc rotor and connecting the pair of action parts.

### Background Art

In the related art, a caliper body for a vehicular disc brake is integrally provided with a pair of action parts arranged facing to each other with a disc rotor interposed therebetween and a bridge part extending over an outer peripheral side of the disc rotor and connecting the pair of action parts, each of the action parts has a plurality of cylinder holes arranged in a disc circumferential direction, and a working fluid communication hole that provides communication between bottom sections of adjacent cylinder holes, the bridge part includes a disc turn-in side bridge part formed on a disc turn-in side when a vehicle is moving forward, a disc turn-out side bridge part formed on a disc turn-out side when the vehicle is moving forward, an intermediate bridge part formed in an intermediate part between the disc turn-in side bridge part and the disc turn-out side bridge part, and ceiling openings separately provided between the intermediate bridge part and the disc turn-in side bridge part and between the intermediate bridge part and the disc turn-out side bridge part (see, for example, PTL 1).

### Citation List

### Patent Literature

PTL 1: JP-A-2011-163401

### Summary of Invention

### Technical Problem

In general, a caliper body for a vehicular disc brake is provided with a pair of action parts arranged facing each other with a disc rotor interposed therebetween and a bridge part extending over an outer peripheral side of the disc rotor and connecting the pair of action parts, and the bridge part includes a disc turn-in side bridge part formed on a disc turn-in side when a vehicle is moving forward, a disc turn-out side bridge part formed on a disc turn-out side when the vehicle is moving forward, an intermediate bridge part formed in an intermediate part between the disc turn-in side bridge part and the disc turn-out side bridge part, and ceiling openings separately provided between the intermediate bridge part and the disc turn-in side bridge part and between the intermediate bridge part and the disc turn-out side bridge part. In this caliper body for a vehicular disc brake, a stress exerted on the caliper body during braking is lower at the periphery of the intermediate bridge part than on the disc turn-out side, the disc turn-in side, or a disc radial inner side, and this variation in stress is one factor of partial deformation of the caliper body during the braking. Therefore, it is desired to suppress stiffness of the periphery of the intermediate bridge part of the caliper body to be low, and to satisfactorily keep a balance of the stress exerted on the caliper body during the braking.

However, in PTL 1 described above, since the working fluid communication hole is formed in a cylindrical shape on a center axis of two cylinder holes and stiffness of a disc radial center section of the caliper body is reduced, a difference between the stress exerted on the periphery of the intermediate bridge part and a stress exerted on the disc radial center section of the caliper body during the braking is increased. Therefore, the amount of deformation of the caliper body during the braking, particularly an end part on the disc radial inner side, becomes large, and there is a concern that satisfactory braking feel cannot be obtained.

Therefore, an object of the invention is to provide a caliper body for a vehicular disc brake capable of obtaining satisfactory braking feel by suppressing stiffness of the periphery of an intermediate bridge part to be low using a working fluid communication hole, and by satisfactorily keeping a balance of a stress exerted on the caliper body during braking.

Document JP S58 203236 A discloses a pin-slide type disc brake with an enlarged pressed area of piston by forming a cylinder hole that has a length in the disc circumferential direction longer than a length in a disc radial direction. A fluid communication channel is placed radial outer of the axis of the cylinder bores.

DE 102 60 829 A1 discloses a four piston braking caliper body, a fluid communication channel is present between the cylinder bores at a position radially on the inner side of the centrelines of them.

### Solution to Problem

In order to achieve the above object, a a vehicular disc brake according to the invention includes: a pair of action parts arranged facing each other with a disc rotor interposed therebetween, each of which includes a cylinder part having a cylinder hole into which a piston is to be inserted; and a bridge part extending over an outer peripheral side of the disc rotor and configured to connect the pair of action parts, in which each of the action parts has a plurality of cylinder holes arranged in a disc circumferential direction, and a working fluid communication hole that provides communication between bottom sections of adjacent cylinder holes, the bridge part includes a disc turn-out side bridge part formed on a disc turn-out side when a vehicle is moving forward, a disc turn-in side bridge part formed on a disc turn-in side when the vehicle is moving forward, an intermediate bridge part formed in an intermediate part between the disc turn-in side bridge part and the disc turn-out side bridge part, and ceiling openings separately provided between the intermediate bridge part and the disc turn-in side bridge part and between the intermediate bridge part and the disc turn-out side bridge part, and the working fluid communication hole is formed such that a disc radial center section is offset closer to a disc radial outer side than a center axis of each of the cylinder holes.

In addition, it is preferable that the working fluid communication hole is formed at a position where a virtual plane passing through center axes of the adjacent cylinder holes passes through an inside of the working fluid communication hole.

Further, it is preferable that the intermediate bridge part is formed at a position corresponding to the disc radial outer side of the working fluid communication hole.

In addition, it is preferable that a cylinder axial length of a gap part formed between the cylinder parts facing each other is formed to have a minimum clearance for inserting the piston into the cylinder hole, and the pair of action parts are formed such that a length from the center axis of the cylinder hole to an inner wall of a disc rotation direction center section of the intermediate bridge part in a direction orthogonal to the center axis is shorter than a length from the center axis to an end part of the cylinder part on a disc radial inner side in a direction orthogonal to the center axis.

Further, it is preferable that an axial length of the cylinder hole is equal to an axial length of the piston.

In addition, it is preferable that pad springs that urge, to the disc radial inner side, a pair of friction pads arranged to sandwich the disc rotor are separately attached to the disc turn-out side bridge part and the disc turn-in side bridge part.

Further, it is preferable that vehicle body attachment parts are provided on the disc turn-out side and the disc turn-in side of one action part when the vehicle is moving forward, and each of the vehicle body attachment parts is provided with an attachment bolt insertion hole in a disc radial direction into which a vehicle body attachment bolt is to be inserted.

In addition, it is preferable that one action part is provided with a vehicle body attachment part, and the intermediate bridge part is formed with a thinning part on a one action part side.

Further, it is preferable that each of the action parts is provided with the plurality of cylinder holes arranged in the disc circumferential direction facing each other, and the thinning part is formed by thinning at least a rib part extending toward bottom walls of the cylinder holes provided on both sides of the intermediate bridge part in a disc rotation direction in a state where the rib part is left in the intermediate bridge part.

In addition, it is preferable that the intermediate bridge part is formed with a second thinning part on the other action part side.

Further, it is preferable that the second thinning part has a projection area of the caliper body from the disc radial outer side smaller than that of the thinning part.

In addition, it is preferable that each of the action parts is provided with the plurality of cylinder holes arranged in the disc circumferential direction facing each other, and the second thinning part is formed by thinning at least a rib part extending toward bottom walls of the cylinder holes provided on both sides of the intermediate bridge part in a disc rotation direction in a state where the rib part is left in the intermediate bridge part.

Further, it is preferable that a third thinning part having a projection area from a side of the one action part opposite to the disc rotor smaller than that of the thinning part and having a depth smaller than that of the thinning part is formed closer to a disc radial inner side of the one action part than the thinning part.

In addition, it is preferable that the vehicle body attachment part is provided on the disc turn-out side and the disc turn-in side when the vehicle is moving forward, and the vehicle body attachment part is provided with an attachment bolt insertion hole in a disc radial direction into which a vehicle body attachment bolt is to be inserted. Advantageous Effect

According to the vehicular disc brake of the invention, by moving a forming position of the working fluid communication hole closer to the intermediate bridge part, stiffness of the intermediate bridge part can be suppressed to be low, and a balance of a stress exerted on the caliper body during braking can be satisfactorily kept. Accordingly, it is possible to suppress partial deformation of the caliper body during the braking, and satisfactory braking feel can be obtained. In addition, since the stiffness of the intermediate bridge part can be suppressed to be low using the working fluid communication hole without changing a shape of an appearance, the appearance of the caliper body can be kept satisfactorily.

Further, since the working fluid communication hole is formed at the position where the virtual plane passing through the center axes of the adjacent cylinder holes passes through the inside of the working fluid communication hole, an air ventilation property of a working fluid can be improved, and the stiffness of the intermediate bridge part can be appropriately suppressed to be low by adjusting a length toward the disc radial outer side.

In addition, since the intermediate bridge part is formed at the position corresponding to the disc radial outer side of the working fluid communication hole, the stiffness of the intermediate bridge part can be accurately and finely adjusted by finely adjusting a size, a shape, and a position of the working fluid communication hole.

Further, since the cylinder axial length of the gap part formed between the cylinder parts facing each other is formed to have the minimum clearance for inserting the piston into the cylinder hole, a cylinder axial length of the caliper body can be shortened. Further, since the pair of action parts are formed such that the length from the center axis of the cylinder hole to the inner wall of the disc rotation direction center section of the intermediate bridge part in the direction orthogonal to the center axis is shorter than the length from the center axis to the end part of the cylinder part on the disc radial inner side in the direction orthogonal to the center axis, the center axis of the cylinder hole and the inner wall of the bridge part can be brought close to each other to reduce a size and weight of the caliper body while ensuring the stiffness of the caliper body.

In addition, since the axial length of the cylinder hole is equal to the axial length of the piston, the cylinder axial length can be shortened, a load (for generating the stress) on the bridge part can be suppressed, the size of the caliper body can be reduce, and the stiffness can be increased.

Further, since the bridge part includes the disc turn-out side bridge part, the disc turn-in side bridge part, and the intermediate bridge part, and the pad springs that urge the friction pads to the disc radial inner side are separately attached to the disc turn-out side bridge part and the disc turn-in side bridge part, it is possible to suppress rattling of the friction pads without increasing the size of the caliper body.

In addition, since the vehicle body attachment parts are provided on the disc turn-out side and the disc turn-in side of the one action part when the vehicle is moving forward, and each of the vehicle body attachment parts is provided with an attachment bolt insertion hole in the disc radial direction into which the vehicle body attachment bolt is to be inserted, a radial mount type caliper body capable of ensuring the stiffness of the caliper body can also be applicable.

Further, since the intermediate bridge part is formed with the thinning part on the one action part side, the stiffness of the intermediate bridge part can be suppressed to be low, the balance of the stress exerted on the caliper body during the braking can be kept satisfactorily, and the braking feel can be improved. In addition, since the one action part is provided with the vehicle body attachment part and is fixed to a vehicle body, even when the stiffness of the intermediate bridge part on the one action part side is suppressed to be low by the thinning part, there is no concern that the one action part is deformed during the braking. Further, the weight of the caliper body is reduced by the thinning part.

In addition, since the thinning part is formed by thinning the rib part extending toward the bottom walls of the cylinder holes of the one action part in the state where the rib part is left in the intermediate bridge part, the rib part can increase the stiffness of the bottom walls of the cylinder holes, suppress the deformation of the caliper body during the braking, and improve the braking feel.

Further, since the intermediate bridge part is formed with the second thinning part on the other action part side, the stiffness of the intermediate bridge part can be further suppressed to be low, the balance of the stress exerted on the caliper body during the braking can be satisfactorily kept, and the weight of the caliper body can be further reduced.

In addition, since the second thinning part formed on the other action part side without being fixed to the vehicle body has a projection area of the caliper body from the disc radial outer side smaller than that of the thinning part, even when the stiffness of the other action part of the intermediate bridge part is suppressed, there is no concern that the other action part is deformed during the braking.

In addition, since the second thinning part is formed by thinning the rib part extending toward the bottom walls of the cylinder holes of the other action part in the state where the rib part is left in the intermediate bridge part, the rib part can increase the stiffness of the bottom walls of the cylinder holes, suppress the deformation of the caliper body during the braking, and improve the braking feel.

In addition, since the third thinning part having a projection area from the side of the one action part opposite to the disc rotor smaller than that of the thinning part and having a depth smaller than that of the thinning part is formed closer to the disc radial inner side of the one action part than the thinning part, the weight of the caliper body can be further reduced.

In addition, if a radial mount type caliper body is applicable in which the vehicle body attachment parts are provided on the disc turn-out side and the disc turn-in side of the one action part when the vehicle is moving forward, and each of the vehicle body attachment parts is provided with the attachment bolt insertion hole in the disc radial direction into which the vehicle body attachment bolt is to be inserted, the disc turn-out side and the disc turn-in side of the caliper body to which the stress is likely to be exerted during the braking are fixed to the vehicle body, the deformation of the caliper body on the disc radial inner side where the amount of deformation is large during the braking can be suppressed, and a difference in amount of deformation between the disc turn-in side and the disc turn-out side can be reliably suppressed.

### Brief Description of Drawings

[FIG. 1] FIG. 1 is a front view of a vehicular disc brake illustrating an embodiment of the invention.
[FIG. 2] FIG. 2 is a rear view of the vehicular disc brake.
[FIG. 3] FIG. 3 is a plan view of the vehicular disc brake.
[FIG. 4] FIG. 4 is a cross-sectional view taken along a IV-IV line in FIG. 1.
[FIG. 5] FIG. 5 is a cross-sectional view taken along a V-V line in FIG. 1.
[FIG. 6] FIG. 6 is a cross-sectional view taken along a VI-VI line in FIG. 1.
[FIG. 7] FIG. 7 is a cross-sectional view taken along a VII-VII line in FIG. 3.
[FIG. 8] FIG. 8 is a cross-sectional view taken along a VIII-VIII line in FIG. 3.

### Description of Embodiments

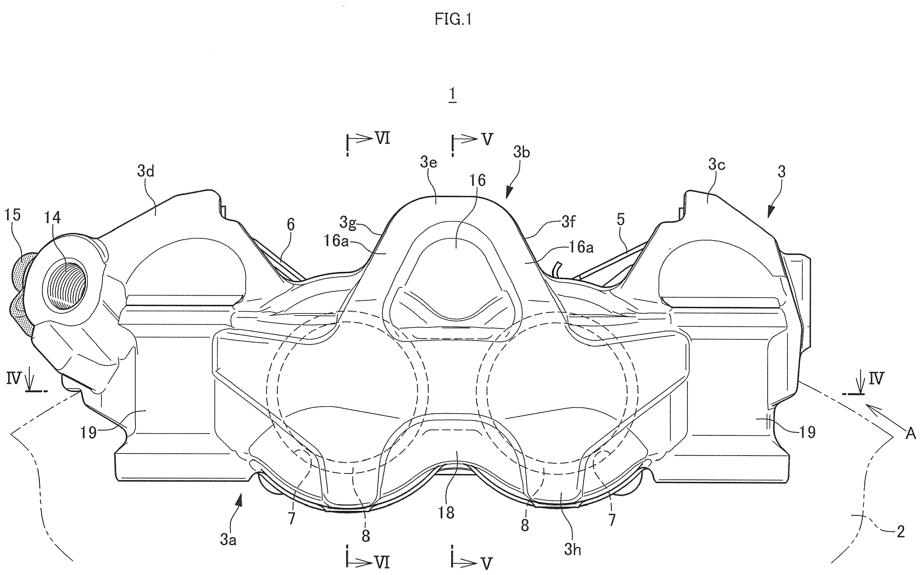

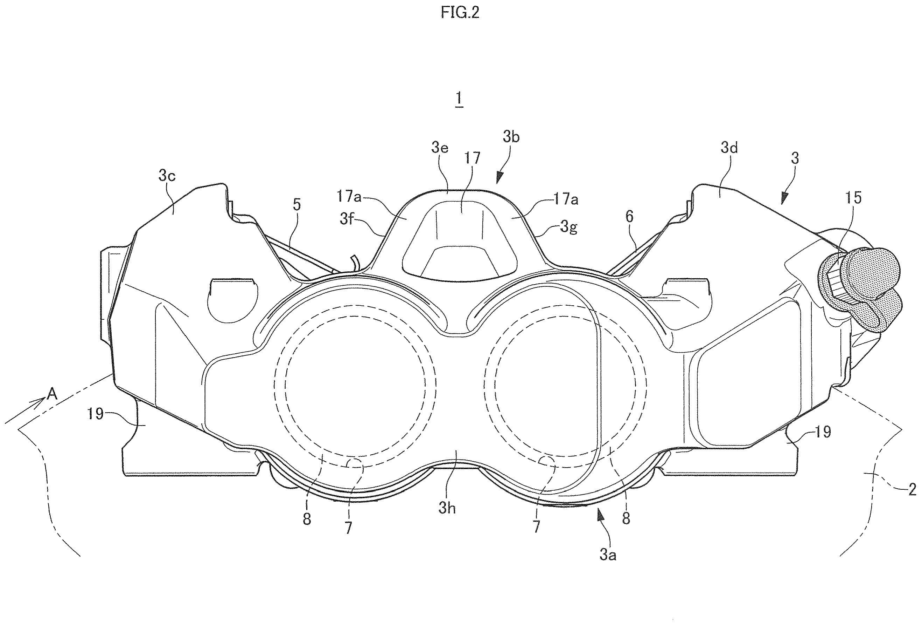

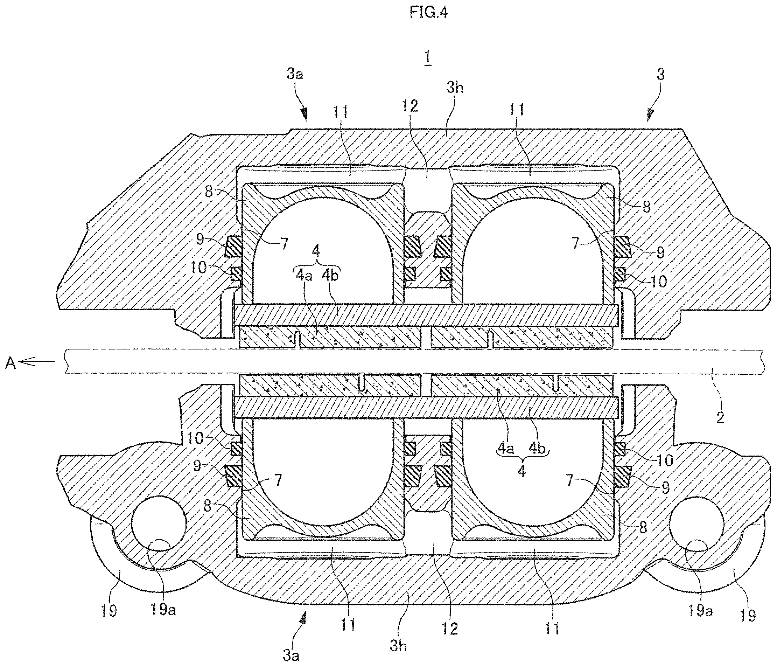

FIGS. 1 to 8 are views illustrating one embodiment of a vehicular disc brake of the invention. An arrow A indicates a rotation direction of a disc rotor that rotates integrally with a wheel when a vehicle is moving forward, and a disc turn-out side and a disc turn-in side to be described below are sides when the vehicle is moving forward.

A vehicular disc brake 1 includes: a disc rotor 2 that rotates integrally with a wheel; a monocoque structure opposed piston type caliper body 3 attached to a vehicle body on one side of the disc rotor 2; a pair of friction pads 4, 4 arranged on both sides of the disc rotor 2; a turn-in side pad spring 5 that urges the friction pads 4, 4 to a disc radial inner side and the disc turn-out side; and a turn-out side pad spring 6 that urges the friction pads 4, 4 to the disc radial inner side.

The caliper body 3 includes a pair of action parts 3a, 3a, and a bridge part 3b straddling the disc rotor 2 and connecting the pair of action parts 3a, 3a, which are integrally formed with each other. The bridge part 3b includes: a disc turn-in side bridge part 3c arranged on the disc turn-in side; a disc turn-out side bridge part 3d arranged on the disc turn-out side; an intermediate bridge part 3e arranged in an intermediate part between the disc turn-in side bridge part 3c and the disc turn-out side bridge part 3d; a first ceiling opening 3f formed between the intermediate bridge part 3e and the disc turn-in side bridge part 3c; and a second ceiling opening 3g is formed between the intermediate bridge part 3e and the disc turn-out side bridge part 3d.

Each action part 3a is provided with a pair of cylinder parts 3h in which cylinder holes 7, 7 having the same diameter and opening on a disc rotor 2 side are arranged in a disc circumferential direction, and a piston 8 is accommodated in each cylinder hole 7 via a piston seal 9 and a dust seal 10. A hydraulic chamber 11 to which a working fluid is supplied is defined between a bottom section of each cylinder hole 7 and the piston 8, and adjacent hydraulic chambers 11, 11 communicate with each other through a working fluid communication hole 12.

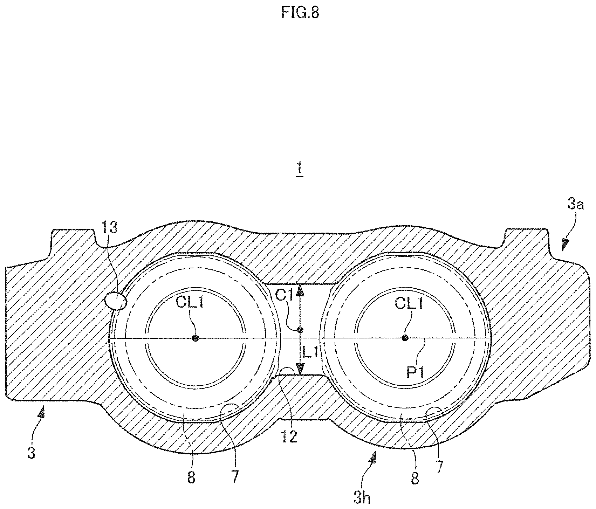

As illustrated in FIG. 8, each working fluid communication hole 12 is formed at a position where a virtual plane P1 that connects center axes CL1, CL1 of the adjacent cylinder holes 7, 7 passes through an inside of the working fluid communication hole 12, and a disc radial center section C1 of the working fluid communication hole 12 is formed to be offset closer to a disc radial outer side than the center axis CL1 of each cylinder hole 7 and is formed to have an oval cross section. In addition, when the caliper body 3 is attached to the vehicle body, on the disc turn-out side of the caliper body 3 which is on an upper side of the vehicle body, a fluid through hole 13 is formed from one action part 3a arranged on an outer side of the vehicle body toward the hydraulic chamber 11 on the disc turn-out side of the other action part 3a, and a fluid through hole 13 is formed from the other action part 3a toward the hydraulic chamber 11 on the disc turn-out side of the one action part 3a. The fluid through holes 13, 13 are crossed each other. A union hole 14 is formed in an opening of one fluid through hole 13, and a bleeder hole for mounting a bleeder 15 is formed in an opening of the other fluid through hole 13.

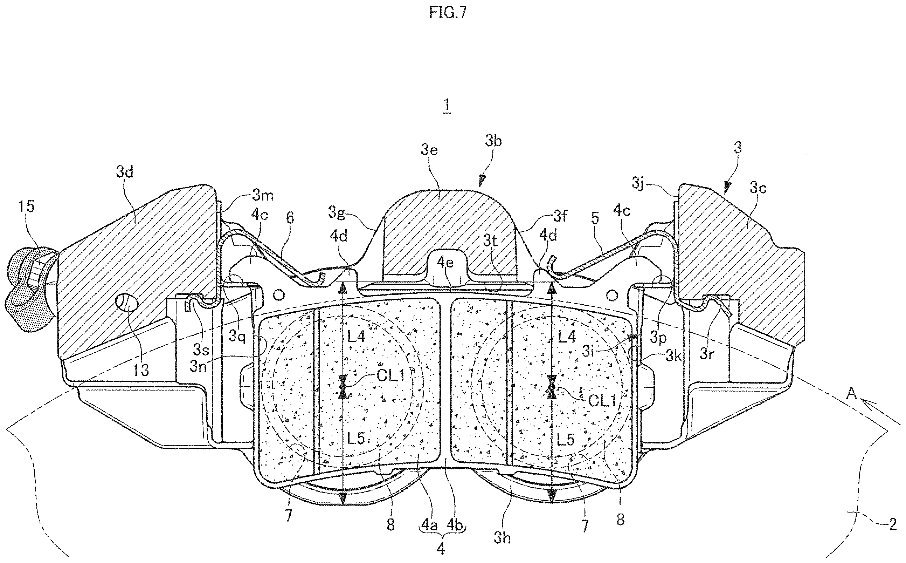

As illustrated in FIG. 7, friction pad accommodating parts 3i that accommodate the friction pads 4, 4 are formed in the action parts 3a, 3a. Each friction pad accommodating part 3i includes: a turn-in side torque receiving surface 3k formed closer to a cylinder hole 7 side than a disc turn-in side surface 3j of the first ceiling opening 3f and formed closer to the disc radial inner side than the disc turn-in side surface 3j; and a turn-out side torque receiving surface 3n formed closer to the cylinder hole 7 side than a disc turn-out side surface 3m of the second ceiling opening 3g and formed on the disc radial inner side. A turn-in side torque receiving step part 3p is formed between the disc turn-in side surface 3j and the turn-in side torque receiving surface 3k, and a turn-out side torque receiving step part 3q is formed between the disc turn-out side surface 3m and the turn-out side torque receiving surface 3n. Further, a turn-in side attachment recessed part 3r for attaching the turn-in side pad spring 5 is formed on a disc radial inner side surface of a disc axial center section of the disc turn-in side bridge part 3c, and a turn-out side attachment recessed part 3s for attaching the turn-out side pad spring 6 is formed on a disc radial inner side surface of a disc axial center section of the disc turn-out side bridge part 3d.

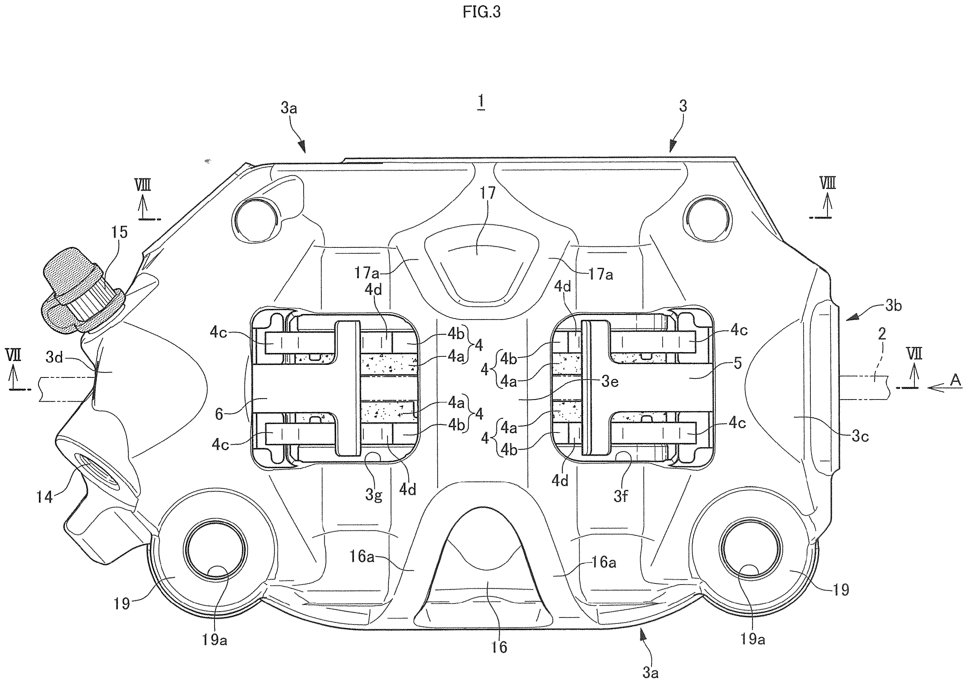

In the intermediate bridge part 3e, a first thinning part 16 (a thinning part of the invention) is formed on an outer wall on one action part 3a side, and a second thinning part 17 is formed on an outer wall on the other action part 3a side. The first thinning part 16 is formed by thinning a pair of rib parts 16a, 16a extending toward outer surfaces of bottom walls of the cylinder holes 7, 7 of the one action part 3a in a state where the pair of rib parts 16a, 16a are left in the intermediate bridge part 3e. As illustrated in FIG. 3, the second thinning part 17 is formed to have a projection area in a plan view smaller than that of the first thinning part 16, that is, a smaller projection area from the disc radial outer side of the caliper body 3 is formed, and the second thinning part 17 is formed by thinning a pair of rib parts 17a, 17a extending toward outer surfaces of bottom walls of the cylinder holes 7, 7 of the other action part 3a in a state where the pair of rib parts 17a, 17a are left in the intermediate bridge part 3e.

As illustrated in FIG. 1, in the one action part 3a, a third thinning part 18 having a projection area smaller than that of the first thinning part 16 in a front view, that is, a smaller projection area from a side of the one action part 3a opposite to the disc rotor, and a depth smaller than that of the first thinning part 16 is formed at an end part on the disc radial inner side at an intermediate position of the outer surfaces of the bottom walls of the cylinder holes 7, 7.

Further, the caliper body 3 is provided with attachment boss parts 19, 19 (vehicle body attachment parts of the invention) in a disc radial direction on the disc turn-out side and the disc turn-in side of the one action part 3a, and is a radial mount type caliper body in which an attachment bolt insertion hole 19a in the disc radial direction is formed in each attachment boss part 19. Each attachment boss part 19 and a caliper attachment part (not shown) provided on the vehicle body side are connected via a vehicle body attachment bolt (not shown) inserted into the attachment bolt insertion hole 19a.

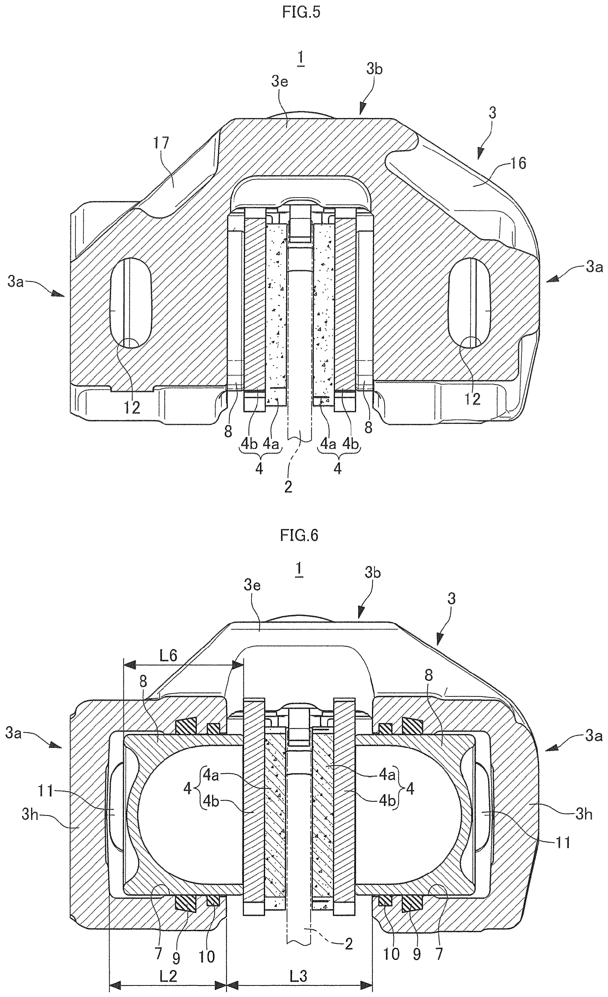

In addition, as illustrated in FIG. 6, the caliper body 3 is formed such that a cylinder axial length L3 of a gap part formed between the cylinder parts 3h, 3h facing each other is a length having a minimum clearance for inserting the piston 8 into the cylinder hole 7 when the piston 8 is being assembled to the caliper body 3. Further, an axial length L2 of the cylinder hole 7 and an axial length L6 of the piston 8 are substantially the same length. As illustrated in FIG. 7, the pair of action parts 3a, 3a are formed such that a length L4 from the center axis CL1 of the cylinder hole 7 to an inner wall 3t of the intermediate bridge part 3e in a direction orthogonal to the center axis CL1 is shorter than a length 5L from the center axis CL1 to the end part of the cylinder part 3h on the disc radial inner side in a direction orthogonal to the center axis CL1.

Each friction pad 4 is formed of a lining 4a that is in sliding contact with a side surface of the disc rotor 2 and a metal back plate 4b to which the lining 4a is attached. Ear pieces 4c, 4c protrude from the disc turn-in side and the disc turn-out side of the back plate 4b on the disc radial outer side. When the ear pieces 4c, 4c are supported by the turn-in side torque receiving step part 3p and the turn-out side torque receiving step part 3q, the friction pads 4, 4 are supported to be movable in a disc axial direction. Further, a pair of protruding pieces 4d, 4d that protrude to the disc radial outer side are provided on a disc radial outer side surface closer to a pad center side than the ear pieces 4c, 4c of the back plate 4b, and a recessed part 4e is formed on the disc radial outer side surface between the pair of protruding pieces.

In the present embodiment, as described above, by bringing the forming position of the working fluid communication hole 12 close to the intermediate bridge part 3e, the stiffness of the intermediate bridge part 3e can be suppressed to be low, and the balance of a stress exerted on the caliper body 3 during braking can be satisfactorily kept. Accordingly, it is possible to suppress deformation of the caliper body 3 during the braking, and satisfactory braking feel can be obtained. In addition, since the stiffness of the intermediate bridge part can be suppressed to be low using the working fluid communication hole 12 without changing a shape of an appearance, the appearance of the caliper body 3 can be kept satisfactorily.

Further, the working fluid communication hole 12 is formed at the position where the virtual plane P1 that connects the center axes CL1, CL1 of the adjacent cylinder holes 7, 7 passes through the inside of the working fluid communication hole 12, and the disc radial center section C1 of the working fluid communication hole 12 is formed to be offset closer to the disc radial outer side than the center axis CL1 of each cylinder hole 7, and is formed to have an oval cross section. Therefore, an air ventilation property of the working fluid can be improved, and the stiffness of the intermediate bridge part 3e can be appropriately suppressed by adjusting the length to the disc radial outer side.

In addition, since the intermediate bridge part 3e is formed at a position corresponding to the disc radial outer side of the working fluid communication hole 12, the stiffness of the intermediate bridge part 3e can be accurately and finely adjusted by finely adjusting a size, a shape, and a position of the working fluid communication hole 12. In addition, since the attachment bolt insertion holes 19a are formed on the disc turn-out side and the disc turn-in side of the one action part 3a, and the caliper body 3 is attached to the vehicle body by screwing the attachment bolt inserted into the attachment bolt insertion hole 19a into the caliper attachment part provided on the vehicle body side, it is possible to suppress deformation on the disc radial inner side where the amount of deformation of the caliper body is large during the braking, and it is possible to reliably suppress the amount of deformation from being different between the disc turn-in side and the disc turn-out side.

Further, as described above, since in the caliper body 3, the intermediate bridge part 3e is formed with the first thinning part 16 on the one action part side and is formed with the second thinning part 17 on the other action part side, the stiffness of the intermediate bridge part 3e can be suppressed to be low, the balance of the stress exerted on the caliper body 3 during the braking can be kept satisfactorily, and the braking feel can be improved. In addition, since the one action part 3a is fixed to the vehicle body via attachment bolts inserted into the attachment boss parts 19, 19, even when the stiffness of the intermediate bridge part 3e on the one action part side is suppressed to be low by the first thinning part 16, there is no concern that the one action part 3a is deformed during the braking.

Further, the first thinning part 16 is formed by thinning the rib parts 16a, 16a extending toward the bottom walls of the cylinder holes 7, 7 provided on the one action part 3a in the state where the rib parts 16a, 16a are left in the intermediate bridge part 3e, and the second thinning part 17 is also formed by thinning the rib parts 17a, 17a extending toward the bottom walls of the cylinder holes 7, 7 provided on the other action part 3a in the state where the rib parts 17a, 17a are left in the intermediate bridge part 3e. Therefore, the rib parts 16a, 16a and 17a, 17a can increase the stiffness of the bottom wall of each cylinder hole 7, suppress the deformation of the caliper body 3 during the braking, and improve the braking feel. Further, by providing the first thinning part 16, the second thinning part 17, and the third thinning part 18, the weight of the caliper body 3 can be reduced.

In addition, as described above, since in the caliper body 3, the cylinder axial length L3 of the gap part formed between the opposing cylinder parts 3h, 3h is formed to have the minimum clearance for inserting the piston 8 into the cylinder hole 7 when the piston 8 is being assembled to the caliper body 3, the length of the cylinder hole 7 of the caliper body 3 in a direction of the center axis CL1 can be shortened. Further, since the length L4 from the center axis CL1 of the cylinder hole 7 to the inner wall 3t of the intermediate bridge part 3e in the direction orthogonal to the center axis CL1 is shorter than the length L5 from the center axis CL1 to the end part of the cylinder part 3h on the disc radial inner side in the direction orthogonal to the center axis CL1, the center axis CL1 of the cylinder hole 7 and the inner wall 3t of the intermediate bridge part 3e can be brought close to each other to reduce the size and the weight of the caliper body 3 while ensuring the stiffness of the caliper body 3.

Further, since the axial length L2 of the cylinder hole 7 is equal to the axial length L6 of the piston 8, a cylinder axial length of the caliper body 3 can be shortened, a load (for generating the stress) on the bridge part 3b can be suppressed, the size of the caliper body 3 can be reduced, and the stiffness can be increased.

In addition, since the turn-in side pad spring 5 and turn-out side pad spring 6 that urge the friction pads 4, 4 to the disc radial inner side are attached to the disc turn-out side bridge part 3d and the disc turn-in side bridge part 3c, respectively, it is possible to suppress rattling of the friction pads without increasing the size of the caliper body. Further, since the pair of action parts 3a, 3a and the bridge part 3b are integrally formed with each other, the stiffness of the caliper body 3 can be further increased.

### Reference Sign List

1 vehicular disc brake
2 disc rotor
3 caliper body
3a action part
3b bridge part
3c disc turn-in side bridge part
3d disc turn-out side bridge part
3e intermediate bridge part
3f first ceiling opening
3g second ceiling opening
3h cylinder part
3i friction pad accommodating part
3j disc turn-in side surface
3k turn-in side torque receiving surface
3m disc turn-out side surface
3n turn-out side torque receiving surface
3p turn-in side torque receiving step part
3q turn-out side torque receiving step part
3r turn-in side attachment recessed part
3s turn-out side attachment recessed part
3t inner wall
4 friction pad
4a lining
4b back plate
4c ear piece
4d protruding piece
4e recessed part
5 turn-in side pad spring
6 turn-out side pad spring
7 cylinder hole
8 piston
9 piston seal
10 dust seal
11 hydraulic chamber
12 working fluid communication hole
13 fluid through hole
14 union hole
15 bleeder
16 first thinning part
16a rib part
17 second thinning part
17a rib part
18 third thinning part
19 attachment boss part
19a attachment bolt insertion hole

## Claims

1. Vehicular disc brake (1), having a caliper body (3) and a disc rotor (2), wherein:
- the caliper body (3) comprises:
- a pair of action parts (3a) arranged facing each other with the disc rotor (2) interposed therebetween, each of which includes a cylinder part (3h) having a cylinder hole (7) into which a piston (8) is to be inserted; and
- a bridge part (3b) extending over an outer peripheral side of the disc rotor (2) and configured to connect the pair of action parts (3a),
- each of the action parts (3a) has a plurality of cylinder holes (7) arranged in a disc circumferential direction, and a working fluid communication hole (12) that provides communication between bottom sections of adjacent cylinder holes (7),
- the bridge part (3b) includes a disc turn-out side bridge part (3d) formed on a disc turn-out side when a vehicle is moving forward, a disc turn-in side bridge part (3c) formed on a disc turn-in side when the vehicle is moving forward, an intermediate bridge part (3e) formed in an intermediate part between the disc turn-in side bridge part (3c) and the disc turn-out side bridge part (3d), and ceiling openings (3f, 3g) separately provided between the intermediate bridge part (3e) and the disc turn-in side bridge part (3c) and between the intermediate bridge part (3e) and the disc turn-out side bridge part (3d), and
- the working fluid communication hole (12) is formed such that a disc radial center section (C1) of the working fluid communication hole (12) is offset closer to a disc radial outer side than a center axis (CL1) of each of the cylinder holes (7).

2. Vehicular disc brake (1) according to claim 1, wherein the working fluid communication hole (12) is formed at a position where a virtual plane passing through center axes (CL1) of the adjacent cylinder holes (7) passes through an inside of the working fluid communication hole (12).

3. Vehicular disc brake (1) according to claim 1 or 2, wherein the intermediate bridge part (3e) is formed at a position corresponding to the disc radial outer side of the working fluid communication hole (12).

4. Vehicular disc brake (1) according to claim 1, wherein
- a cylinder axial length (L3) of a gap part formed between the cylinder parts (3h) facing each other is formed to have a minimum clearance for inserting the piston (8) into the cylinder hole (7), and
- the pair of action parts (3a) are formed such that a length from the center axis (CL1) of the cylinder hole (7) to an inner wall (3t) of a disc rotation direction center section of the intermediate bridge part (3e) in a direction orthogonal to the center axis (CL1) is shorter than a length from the center axis (CL1) to an end part of the cylinder part (3h) on a disc radial inner side in a direction orthogonal to the center axis (CL1).

5. Vehicular disc brake (1) according to claim 4, wherein an axial length (L2) of the cylinder hole (7) is equal to an axial length (L6) of the piston (8).

6. Vehicular disc brake (1) according to claim 4 or 5, wherein pad springs (5, 6) that urge, to the disc radial inner side, a pair of friction pads (4) arranged to sandwich the disc rotor (2) are separately attached to the disc turn-out side bridge part (3d) and the disc turn-in side bridge part (3c).

7. Vehicular disc brake (1) according to any one of claims 1 to 6, wherein:
- vehicle body attachment parts (19) are provided on the disc turn-out side and the disc turn-in side of one action part (3a) when the vehicle is moving forward, and
- each of the vehicle body attachment parts (19) is provided with an attachment bolt insertion hole (19a) in a disc radial direction into which a vehicle body attachment bolt is to be inserted.

8. Vehicular disc brake (1) according to claim 1, wherein:
- one action part (3a) is provided with a vehicle body attachment part (19), and
- the intermediate bridge part (3e) is formed with a thinning part (16) on a one action part side.

9. Vehicular disc brake (1) according to claim 8, wherein:
- each of the action parts (3a) is provided with the plurality of cylinder holes (7) arranged in the disc circumferential direction facing each other, and
- the thinning part (16) is formed by thinning at least a rib part (17a) extending toward bottom walls of the cylinder holes (7) provided on both sides of the intermediate bridge part (3e) in a disc rotation direction in a state where the rib part (17a) is left in the intermediate bridge part (3e).

10. Vehicular disc brake (1) according to claim 8 or 9, wherein the intermediate bridge part (3e) is formed with a second thinning part (17) on the other action part side.

11. Vehicular disc brake (1) according to claim 10, wherein the second thinning part (17) has a projection area of the caliper body (3) from the disc radial outer side smaller than that of the thinning part (16).

12. Vehicular disc brake (1) according to claim 10 or 11, wherein:
- each of the action parts (3a) is provided with the plurality of cylinder holes (7) arranged in the disc circumferential direction facing each other, and
- the second thinning part (17) is formed by thinning at least a rib part (17a) extending toward bottom walls of the cylinder holes (7) provided on both sides of the intermediate bridge part (3e) in a disc rotation direction in a state where the rib part (17a) is left in the intermediate bridge part (3e).

13. Vehicular disc brake (1) according to any one of claims 8 to 12, wherein a third thinning part (18) having a projection area from a side of the one action part (3a) opposite to the disc rotor (2) smaller than that of the thinning part (16) and having a depth smaller than that of the thinning part (16) is formed closer to a disc radial inner side of the one action part (3a) than the thinning part (16).

14. Vehicular disc brake (1) according to any one of claims 8 to 13, wherein:
- the vehicle body attachment part (19) is provided on the disc turn-out side and the disc turn-in side when the vehicle is moving forward, and
- the vehicle body attachment part (19) is provided with an attachment bolt insertion hole (19a) in a disc radial direction into which a vehicle body attachment bolt is to be inserted.

## Patentansprüche

1. Fahrzeugscheibenbremse (1) mit einem Bremssattelkörper (3) und einem Scheibenrotor (2), wobei:
- der Bremssattelkörper (3) umfasst:
- ein Paar von Betätigungsteilen (3a), die einander zugewandt angeordnet sind, wobei der Scheibenrotor (2) dazwischen angeordnet ist, von denen jedes ein Zylinderteil (3h) mit einem Zylinderloch (7) aufweist, in das ein Kolben (8) einzusetzen ist; und
- ein Brückenteil (3b), das sich über eine Außenumfangsseite des Scheibenrotors (2) erstreckt und konfiguriert ist, um das Paar von Betätigungsteilen (3a) zu verbinden,
- jedes der Betätigungsteile (3a) eine Vielzahl von Zylinderlöchern (7), die in einer Scheibenumfangsrichtung angeordnet sind, und eine Arbeitsfluidverbindungsöffnung (12) aufweist, die eine Verbindung zwischen Bodenabschnitten benachbarter Zylinderlöcher (7) bereitstellt,
- das Brückenteil (3b) ein Brückenteil (3d) auf der turn-out-Seite der Scheibe, das auf einer turn-out-Seite der Scheibe ausgebildet ist, wenn sich ein Fahrzeug vorwärts bewegt, ein Brückenteil (3c) auf der turn-in-Seite der Scheibe, das auf einer turn-in-Seite der Scheibe ausgebildet ist, wenn sich das Fahrzeug vorwärts bewegt, ein Zwischenbrückenteil (3e), das in einem Zwischenteil zwischen dem Brückenteil (3c) auf der turn-in-Seite der Scheibe und dem Brückenteil (3d) auf der turn-out-Seite der Scheibe ausgebildet ist, und Deckenöffnungen (3f, 3g) aufweist, die separat zwischen dem Zwischenbrückenteil (3e) und dem Brückenteil (3c) auf der turn-in-Seite der Scheibe und zwischen dem Zwischenbrückenteil (3e) und dem Brückenteil (3d) auf der turn-out-Seite der Scheibe vorgesehen sind, und
- die Arbeitsfluidverbindungsöffnung (12) derart ausgebildet ist, dass ein radialer Scheibenmittelabschnitt (C1) der Arbeitsfluidverbindungsöffnung (12) näher zu einer radialen Scheibenaußenseite versetzt ist als eine Mittelachse (CL1) jedes der Zylinderlöcher (7).

2. Fahrzeugscheibenbremse (1) nach Anspruch 1, wobei die Arbeitsfluidverbindungsöffnung (12) an einer Position ausgebildet ist, an der eine virtuelle Ebene, die durch Mittelachsen (CL1) der benachbarten Zylinderlöcher (7) verläuft, durch eine Innenseite der Arbeitsfluidverbindungsöffnung (12) verläuft.

3. Fahrzeugscheibenbremse (1) nach Anspruch 1 oder 2, wobei das Zwischenbrückenteil (3e) an einer Position ausgebildet ist, die der radialen Scheibenaußenseite der Arbeitsfluidverbindungsöffnung (12) entspricht.

4. Fahrzeugscheibenbremse (1) nach Anspruch 1, wobei
- eine Zylinderaxiallänge (L3) eines Spaltteils, das zwischen den einander zugewandten Zylinderteilen (3h) ausgebildet ist, so ausgebildet ist, dass sie einen minimalen Zwischenraum zum Einsetzen des Kolbens (8) in das Zylinderloch (7) aufweist, und
- das Paar von Betätigungsteilen (3a) derart ausgebildet ist, dass eine Länge von der Mittelachse (CL1) des Zylinderlochs (7) zu einer Innenwand (3t) eines Scheibenrotationsrichtungsmittelabschnitts des Zwischenbrückenteils (3e) in einer Richtung orthogonal zu der Mittelachse (CL1) kürzer ist als eine Länge von der Mittelachse (CL1) zu einem Endteil des Zylinderteils (3h) auf einer radialen Scheibeninnenseite in einer Richtung orthogonal zu der Mittelachse (CL1).

5. Fahrzeugscheibenbremse (1) nach Anspruch 4, wobei eine axiale Länge (L2) des Zylinderlochs (7) gleich einer axialen Länge (L6) des Kolbens (8) ist.

6. Fahrzeugscheibenbremse (1) nach Anspruch 4 oder 5, wobei Belagfedern (5, 6), die ein Paar von Reibbelägen (4), die angeordnet sind, um den Scheibenrotor (2) einzuklemmen, zu der radialen Scheibeninnenseite drängen, separat an dem Brückenteil (3d) auf der turn-out-Seite der Scheibe und dem Brückenteil (3c) auf der turn-in-Seite der Scheibe angebracht sind.

7. Fahrzeugscheibenbremse (1) nach einem der Ansprüche 1 bis 6, wobei:
- Fahrzeugkarosseriebefestigungsteile (19) auf der turn-out-Seite der Scheibe und der turn-in-Seite der Scheibe eines Betätigungsteils (3a) vorgesehen sind, wenn sich das Fahrzeug vorwärts bewegt, und
- jedes der Fahrzeugkarosseriebefestigungsteile (19) mit einem Befestigungsbolzeneinsetzloch (19a) in einer radialen Richtung der Scheibe versehen ist, in das ein Fahrzeugkarosseriebefestigungsbolzen einzusetzen ist.

8. Fahrzeugscheibenbremse (1) nach Anspruch 1, wobei:
- ein Betätigungsteil (3a) mit einem Fahrzeugkarosseriebefestigungsteil (19) versehen ist, und
- das Zwischenbrückenteil (3e) mit einem Verdünnungsteil (16) auf einer Seite des einen Betätigungsteils ausgebildet ist.

9. Fahrzeugscheibenbremse (1) nach Anspruch 8, wobei:
- jedes der Betätigungsteile (3a) mit der Vielzahl von Zylinderlöchern (7) versehen ist, die in der Scheibenumfangsrichtung einander zugewandt angeordnet sind, und
- das Verdünnungsteil (16) durch Verdünnen mindestens eines Rippenteils (17a) ausgebildet ist, das sich zu Bodenwänden der Zylinderlöcher (7) erstreckt, die auf beiden Seiten des Zwischenbrückenteils (3e) in einer Scheibenrotationsrichtung in einem Zustand vorgesehen sind, in dem das Rippenteil (17a) in dem Zwischenbrückenteil (3e) belassen ist.

10. Fahrzeugscheibenbremse (1) nach Anspruch 8 oder 9, wobei das Zwischenbrückenteil (3e) mit einem zweiten Verdünnungsteil (17) auf der Seite des anderen Betätigungsteils ausgebildet ist.

11. Fahrzeugscheibenbremse (1) nach Anspruch 10, wobei das zweite Verdünnungsteil (17) eine Vorsprungsfläche des Bremssattelkörpers (3) von der radialen Scheibenaußenseite aufweist, die kleiner als die des Verdünnungsteils (16) ist.

12. Fahrzeugscheibenbremse (1) nach Anspruch 10 oder 11, wobei:
- jedes der Betätigungsteile (3a) mit der Vielzahl von Zylinderlöchern (7) versehen ist, die in der Scheibenumfangsrichtung einander zugewandt angeordnet sind, und
- das zweite Verdünnungsteil (17) durch Verdünnen mindestens eines Rippenteils (17a) ausgebildet ist, das sich zu Bodenwänden der Zylinderlöcher (7) erstreckt, die auf beiden Seiten des Zwischenbrückenteils (3e) in einer Scheibenrotationsrichtung in einem Zustand vorgesehen sind, in dem das Rippenteil (17a) in dem Zwischenbrückenteil (3e) belassen ist.

13. Fahrzeugscheibenbremse (1) nach einem der Ansprüche 8 bis 12, wobei ein drittes Verdünnungsteil (18) mit einer Vorsprungsfläche von einer Seite des einen Betätigungsteils (3a) gegenüber dem Scheibenrotor (2), die kleiner als die des Verdünnungsteils (16) ist, und mit einer Tiefe, die kleiner als die des Verdünnungsteils (16) ist, näher zu einer radialen Scheibeninnenseite des einen Betätigungsteils (3a) als das Verdünnungsteil (16) ausgebildet ist.

14. Fahrzeugscheibenbremse (1) nach einem der Ansprüche 8 bis 13, wobei:
- das Fahrzeugkarosseriebefestigungsteil (19) auf der turn-out-Seite der Scheibe und der turn-in-Seite der Scheibe vorgesehen ist, wenn sich das Fahrzeug vorwärts bewegt, und
- das Fahrzeugkarosseriebefestigungsteil (19) mit einem Befestigungsbolzeneinsetzloch (19a) in einer radialen Richtung der Scheibe versehen ist, in das ein Fahrzeugkarosseriebefestigungsbolzen einzusetzen ist.

## Revendications

1. Frein à disque de véhicule (1), ayant un corps d'étrier (3) et un rotor de disque (2), dans lequel :
- le corps d'étrier (3) comprend :
- une paire de parties d'actionnement (3a) agencées l'une en face de l'autre avec le rotor de disque (2) interposé entre elles, dont chacune comprend une partie de cylindre (3h) ayant un trou de cylindre (7) dans lequel un piston (8) doit être inséré ; et
- une partie de pont (3b) s'étendant sur un côté périphérique externe du rotor de disque (2) et configurée pour relier la paire de parties d'actionnement (3a),
- chacune des parties d'actionnement (3a) a une pluralité de trous de cylindre (7) agencés dans une direction circonférentielle de disque, et un trou de communication de fluide de travail (12) qui fournit une communication entre des sections inférieures de trous de cylindre adjacents (7),
- la partie de pont (3b) comprend une partie de pont côté sortie de disque (3d) formée sur un côté sortie de disque lorsqu'un véhicule se déplace vers l'avant, une partie de pont côté entrée de disque (3c) formée sur un côté entrée de disque lorsque le véhicule se déplace vers l'avant, une partie de pont intermédiaire (3e) formée dans une partie intermédiaire entre la partie de pont côté entrée de disque (3c) et la partie de pont côté sortie de disque (3d), et des ouvertures de plafond (3f, 3g) prévues séparément entre la partie de pont intermédiaire (3e) et la partie de pont côté entrée de disque (3c) et entre la partie de pont intermédiaire (3e) et la partie de pont côté sortie de disque (3d), et
- le trou de communication de fluide de travail (12) est formé de sorte qu'une section centrale radiale de disque (C1) du trou de communication de fluide de travail (12) est décalée plus près d'un côté extérieur radial de disque qu'un axe central (CL1) de chacun des trous de cylindre (7).

2. Frein à disque de véhicule (1) selon la revendication 1, dans lequel le trou de communication de fluide de travail (12) est formé à une position où un plan virtuel passant à travers des axes centraux (CL1) des trous de cylindre adjacents (7) passe à travers un intérieur du trou de communication de fluide de travail (12).

3. Frein à disque de véhicule (1) selon la revendication 1 ou 2, dans lequel la partie de pont intermédiaire (3e) est formée à une position correspondant au côté extérieur radial de disque du trou de communication de fluide de travail (12).

4. Frein à disque de véhicule (1) selon la revendication 1, dans lequel :
- une longueur axiale de cylindre (L3) d'une partie d'espace formée entre les parties de cylindre (3h) se faisant face est formée pour avoir un jeu minimum pour insérer le piston (8) dans le trou de cylindre (7), et
- la paire de parties d'actionnement (3a) sont formées de sorte qu'une longueur de l'axe central (CL1) du trou de cylindre (7) à une paroi interne (3t) d'une section centrale de direction de rotation de disque de la partie de pont intermédiaire (3e) dans une direction orthogonale à l'axe central (CL1) est plus courte qu'une longueur de l'axe central (CL1) à une partie d'extrémité de la partie de cylindre (3h) sur un côté intérieur radial de disque dans une direction orthogonale à l'axe central (CL1).

5. Frein à disque de véhicule (1) selon la revendication 4, dans lequel une longueur axiale (L2) du trou de cylindre (7) est égale à une longueur axiale (L6) du piston (8).

6. Frein à disque de véhicule (1) selon la revendication 4 ou 5, dans lequel des ressorts de plaquette (5, 6) qui poussent, vers le côté intérieur radial de disque, une paire de plaquettes de friction (4) agencées pour prendre en sandwich le rotor de disque (2) sont fixés séparément à la partie de pont côté sortie de disque (3d) et à la partie de pont côté entrée de disque (3c).

7. Frein à disque de véhicule (1) selon l'une quelconque des revendications 1 à 6, dans lequel :
- des parties de fixation de corps de véhicule (19) sont prévues sur le côté sortie de disque et le côté entrée de disque d'une partie d'action (3a) lorsque le véhicule se déplace vers l'avant, et
- chacune des parties de fixation de corps de véhicule (19) est prévue avec un trou d'insertion de boulon de fixation (19a) dans une direction radiale de disque dans lequel un boulon de fixation de corps de véhicule doit être inséré.

8. Frein à disque de véhicule (1) selon la revendication 1, dans lequel :
- une partie d'action (3a) est prévue avec une partie de fixation de corps de véhicule (19), et
- la partie de pont intermédiaire (3e) est formée avec une partie d'amincissement (16) sur un côté de partie d'actionnement.

9. Frein à disque de véhicule (1) selon la revendication 8, dans lequel :
- chacune des parties d'actionnement (3a) est prévue avec la pluralité de trous de cylindre (7) agencés dans la direction circonférentielle de disque se faisant face, et
- la partie d'amincissement (16) est formée en amincissant au moins une partie de nervure (17a) s'étendant vers des parois inférieures des trous de cylindre (7) prévus sur les deux côtés de la partie de pont intermédiaire (3e) dans une direction de rotation de disque dans un état où la partie de nervure (17a) est laissée dans la partie de pont intermédiaire (3e).

10. Frein à disque de véhicule (1) selon la revendication 8 ou 9, dans lequel la partie de pont intermédiaire (3e) est formée avec une seconde partie d'amincissement (17) sur l'autre côté de partie d'actionnement.

11. Frein à disque de véhicule (1) selon la revendication 10, dans lequel la seconde partie d'amincissement (17) a une zone de saillie du corps d'étrier (3) à partir du côté extérieur radial de disque plus petite que celle de la partie d'amincissement (16).

12. Frein à disque de véhicule (1) selon la revendication 10 ou 11, dans lequel :
- chacune des parties d'actionnement (3a) est prévue avec la pluralité de trous de cylindre (7) agencés dans la direction circonférentielle de disque se faisant face, et
- la deuxième partie d'amincissement (17) est formée en amincissant au moins une partie de nervure (17a) s'étendant vers des parois inférieures des trous de cylindre (7) prévus sur les deux côtés de la partie de pont intermédiaire (3e) dans une direction de rotation de disque dans un état où la partie de nervure (17a) est laissée dans la partie de pont intermédiaire (3e).

13. Frein à disque de véhicule (1) selon l'une quelconque des revendications 8 à 12, dans lequel une troisième partie d'amincissement (18) ayant une zone de saillie à partir d'un côté de la partie d'actionnement (3a) opposée au rotor de disque (2) plus petite que celle de la partie d'amincissement (16) et ayant une profondeur plus petite que celle de la partie d'amincissement (16) est formée plus près d'un côté intérieur radial de disque de la partie d'actionnement (3a) que la partie d'amincissement (16).

14. Frein à disque de véhicule (1) selon l'une quelconque des revendications 8 à 13, dans lequel :
- la partie de fixation de corps de véhicule (19) est prévue sur le côté sortie de disque et le côté entrée de disque lorsque le véhicule se déplace vers l'avant, et
- la partie de fixation de corps de véhicule (19) est prévue avec un trou d'insertion de boulon de fixation (19a) dans une direction radiale de disque dans lequel un boulon de fixation de corps de véhicule doit être inséré.
